# EUROPÄISCHE PATENTSCHRIFT

(11) **EP 3 700 652 B1**
(45) Veröffentlichungstag und Bekanntmachung des Hinweises auf die Patenterteilung: **11.08.2021**
(21) Anmeldenummer: 18795411.0
(22) Anmeldetag: 23.10.2018
(51) Int. Cl.: B01D 35/12, B01D 35/147, B01D 29/15, B01D 29/52, B01D 29/66

(54) **FILTERVORRICHTUNG**
FILTER APPARATUS
DISPOSITIF DE FILTRATION

(30) Priorität: 26.10.2017 DE 102017009990
(43) Veröffentlichungstag der Anmeldung: 02.09.2020
(73) Patentinhaber: Hydac Process Technology GmbH, 66538 Neunkirchen (DE)
(72) Erfinder: HRIN, Sebastian, 50189 Elsdorf (DE); LINGEN, Hans-Jürgen, 41069 Mönchengladbach (DE)
(74) Vertreter: Bartels und Partner, Patentanwälte
(86) Internationale Anmeldenummer: PCT/EP2018/078966
(87) Internationale Veröffentlichungsnummer: WO 2019/081466

(56) Entgegenhaltungen:
- WO-A1-2012/150011
- CN-U- 201 880 423
- DE-A1- 1 817 738
- DE-B1- 1 486 812

## Beschreibung

Die Erfindung betrifft eine Filtervorrichtung zum Abreinigen von partikulären Verschmutzungen aus einem Fluidstrom mit einer Mehrzahl von Filterelementen, die in Filterkammern als Bestandteil eines gemeinsamen Filtergehäuses aufgenommen sich um eine Rückspüleinrichtung gruppieren, die zur Aufnahme einer Rückspülmenge einen Kolbenspeicher aufweist, in dessen Speichergehäuse längsverfahrbar ein Kolben geführt ist, der von einem Druckmedium angesteuert die im Speichergehäuse bevorratete Rückspülmenge an mindestens ein für seine Abreinigung rückzuspülendes Filterelement über eine Rückspüleinrichtung weiterleitet, die auch die Abfuhr der Rückspülmenge aus der Filtervorrichtung vornimmt.

Eine derartige Filtervorrichtung ist beispielsweise aus WO 2012/150011 A1 bekannt. Die bekannte Filtervorrichtung umfasst eine Drucksteuereinrichtung zur Unterstützung der Rückspülung einzelner Filterelemente mit einem Hydrospeicher, dessen eine Fluidkammer während des Filtrationsvorgangs mit einer Menge an abgereinigtem Fluid befüllbar und für einen Rückspülvorgang über eine Rückspülführung mit der Reinseite des abzureinigenden Filterelementes verbindbar ist. Eine weitere Fluidkammer des Hydrospeichers ist für einen Rückspülvorgang mit einem Gasdruck beaufschlagbar, um durch eine dadurch bewirkte Bewegung des Trennelementes des Hydrospeichers die Füllmenge des abgereinigten Fluids für den Rückspülvorgang eines Filterelements zumindest teilweise aus der einen Fluidkammer wieder abzugeben.

Solche Filtervorrichtungen werden regelmäßig auch im Bereich der Schifffahrt, insbesondere für Schiffsmotoren, eingesetzt. Mit der ab 2016 geltenden Tier III-Norm verschärft die International Maritime Organisation (IMO) die Grenzwerte für klimarelevante Abgase von Schiffen, wie Stickoxide und Schwefeloxide. Die Hersteller von modernen Schiffsmotoren setzen demgemäß zusehends auf sog. Common-Rail-Systeme, um den Treibstoffverbrauch und die Abgase zu reduzieren. Hieraus erwachsen neue Anforderungen an das effiziente Fluidmanagement von Schiffsmotoren und daraus sich ergebende, erhöhte Anforderungen an die Reinheit von Kraft- und Schmierstoffen an Bord von Schiffen.

Solchen Filtervorrichtungen sind sogenannte Bypass-Filter regelmäßig beigestellt, über die der abzureinigende Fluidstrom, regelmäßig gebildet aus Schweröl, Diesel, Biokraftstoffen und Schmieröl, ausschließlich für eine Abreinigung geführt wird, sobald der Bypass-Filter mittels einer Umschalteinrichtung angesteuert eine Stilllegung der eigentlichen Filtervorrichtung zu Wartungs- und Inspektionszwecken erlaubt, was den Austausch verbrauchter Filterelemente gegen Neuelemente in diesem Rahmen mit einschließt.

Die vorstehend beschriebenen Lösungen bauen erfahrungsgemäß groß auf und apparatetechnisch gesehen ist die Aufstellung vor Ort häufig aufwändig und mithin kostenintensiv. Auch kommt es aufgrund der unterschiedlichen Aufstellorte von Filtervorrichtungen und zugehörigen Bypass-Filtern, auch wenn diese benachbart zueinander angeordnet sind, zu unterschiedlichen thermischen Betriebssituationen, was sich ungünstig auf die Fluidbehandlung, insbesondere im Rahmen der Fluidfiltration, auswirken kann.

Des Weiteren ist es grundsätzlich ein Ziel, die bewährte Filtrationstechnologie im Rahmen der Kraftstoffversorgung von Schiffsmotoren und deren Schmierung auch für andere neue Anwendungsgebiete einsetzen zu können, beispielsweise im Rahmen der Filtration von Kühlschmierstoffen bei Werkzeugmaschinen etc.

Weitere Filtervorrichtungen gehen aus der DE 1 817 738, der CN 201 880 423 U und der DE 1 486 812 hervor.

Ausgehend von diesem Stand der Technik liegt daher der Erfindung die Aufgabe zugrunde, unter Beibehalten der Vorteile der bekannten Filtervorrichtungen, nämlich eine sichere Abfiltrierung von Partikelverschmutzungen aus Fluiden sicherzustellen, dahingehend weiter zu verbessern, dass neue Anwendungsgebiete für diese Filtrationstechnologie erschließbar sind, und dass Einbauraum bei der Aufstellung und Kosten gespart werden bei verbesserten, thermischen Verhältnissen im Betrieb solcher Vorrichtungen. Eine dahingehende Aufgabe löst eine Filtervorrichtung mit den Merkmalen des Patentanspruchs 1 in seiner Gesamtheit.

Dadurch, dass gemäß dem kennzeichnenden Teil des Patentanspruchs 1 ein bestimmtes Filterelement als Bypass-Filterelement, das Teil der Mehrzahl von Filterelementen der Vorrichtung ist, nach Betätigen einer Umschalteinrichtung ausschließlich die Partikelabreinigung vornimmt und die anderen Filterelemente von dieser Abreinigung ausgenommen sind, und dass die Umschalteinrichtung gleichfalls in dem gemeinsamen Filtergehäuse aufgenommen ist, ist das Bypass-Filterelement respektive der Bypass-Filter selbst integraler Bestandteil des Gesamt-Filtergehäuses zusammen mit den anderen Filterelementen der Vorrichtung, die jeweils eine eigenständige Filterkammer aufweisen, die in ihrer Gesamtheit das Filtergehäuse als Ganzes ausbilden. Es hat sich auch in der praktischen Realisierung der Erfindung gezeigt, dass durch die Einbindung des Bypass-Filterelementes in den Gesamtverbund der Filterelemente in nur einer Gehäuseeinrichtung, insbesondere bei einer Ausbildung des Filtergehäuses aus Stahlguss, eine vergleichmäßigte thermische Wärmeverteilung innerhalb der Filtervorrichtung mit der Bypass-Einrichtung erreicht ist, so dass zum einen der bisher bestehenden Gefahr von thermisch bedingten Spannungsrissen im Gehäuse wirksam begegnet ist und zum anderen im Betrieb der Vorrichtung es zu einem vergleichsmäßigten thermischen Eintrag seitens des heißen oder sonst betriebswarmen Fluids in das Gehäuse mit seinen aufgenommenen einzelnen Komponenten, wie Filterelement und Rückspüleinrichtung, kommt, was sich günstig auf die Fluidfiltration auswirkt.

Die erfindungsgemäße Filtervorrichtung baut insoweit auch kompakt auf und kann somit an Orten aufgestellt werden, die über nur begrenzte Einbauräume verfügen, wie sie beispielsweise im Rahmen einer Kühlschmiermittel-Filtration bei Werkzeugmaschinen gegeben ist. Da nur ein Filtergehäuse mit Filterkammern für alle Filterelemente einschließlich dem Bypass-Filterelement zu stellen ist, vorzugsweise im Rahmen eines einzelnen Stahlgusses, ist die erfindungsgemäße Filtervorrichtung auch günstig in der Herstellung und aufgrund der zentralen Anordnung aller Komponenten in und an dem Zentralgehäuse sind die Montage- und Wartungskosten gleichfalls reduziert.

In vorteilhafter Ausgestaltung lässt sich der im Filtergehäuse integrierte Bypass-Filter mit seinem Filterelement auch zum Anfahren von Kraftstoff- und sonstigen hydraulischen Anlagen jedweder Art einsetzen, bei denen sehr hohe Schmutzfrachten von Partikelverunreinigungen anfallen können, indem anfänglich die sonstige Filtervorrichtung mit ihren Filterelementen von der dahingehenden Filtration ausgenommen wird. Ist das jeweilige Bypass-Filterelement aufgrund des Schmutzeintrages nicht mehr brauchbar, kann es gegen ein Neuelement ausgetauscht werden, wobei der dahingehende Austausch bis zum Herstellen einer normalen Betriebssituation auch mehrfach erfolgen kann, bei der dann auf den normalen Filtrationsbetrieb nebst einer Rückspülung mit der sonstigen Filtervorrichtung unter Umgehen des Bypass-Filters umgeschaltet wird.

Bei einer weiteren vorteilhaften Ausgestaltung kann auch vorgesehen sein, die Anordnung von Bypass-Filterelement und den anderen Filterelementen der Filtervorrichtung derart zu wählen, dass mit nur einer Rückspüleinrichtung sich alle Filterelemente in Hintereinanderabfolge abreinigen lassen. Dergestalt wäre es möglich, das Bypass-Filterelement neben seiner angesprochenen Bypass-Filtration auch als sonstiges Filterelement, wie die anderen Filterelemente der Filtervorrichtung, zur Filtration einzusetzen.

Bei einer bevorzugten Ausführungsform der erfindungsgemäßen Filtervorrichtung weist die Umschalteinrichtung eine Verteileinrichtung auf, die in ihrer einen Schaltstellung unter Umgehen des Bypass-Filterelementes die anderen Filterelemente, soweit sie keiner Rückspülung unterliegen, mit Unfiltrat versorgt und das Filtrat abführt und die in einer weiteren Schaltstellung unter Umgehen dieser Filterelemente das Bypass-Filterelement mit Unfiltrat versorgt und das Filtrat abführt. Die Verteileinrichtung stellt eine korrekte Verzweigung und Zuordnung der Fluidwege in der Filtervorrichtung sicher. Im Anlaufbetrieb wird der grob verschmutzte Fluidstrom als Unfiltrat zum Bypass-Filterelement geleitet und dort über ein geeignetes Filtermaterial mit vorzugsweise gröberer Filterfeinheit abgereinigt, wobei die anderen Filterelemente vom Filtrationsbetrieb dann ausgenommen sind.

Im Regelbetrieb der Filtervorrichtung wird der nicht abgereinigte oder verschmutzte Fluidstrom als Unfiltratstrom zu den anderen Filterelementen geleitet und über ein geeignetes, vorgebbares Filtermaterial abgereinigt, wobei das Bypass-Filterelement vom Filtrationsbetrieb dann ausgenommen ist. Es wäre jedoch auch grundsätzlich möglich, das Bypass-Filterelement nach Abschluss eines Anlaufbetriebes und einer zugehörigen Abreinigung mittels der Rückspüleinrichtung in den regulären Filtrationsbetrieb mit einzubinden. Aufgrund der kompakten Anordnung der Komponenten der erfindungsgemäßen Filtervorrichtung in einem gemeinsamen, vorzugsweise aus Stahlguss gefertigten Filtergehäuse werden die im Regelbetrieb eingesetzten Filterelemente gleichmäßig mit Fluid, auch mit entsprechend hohen Betriebstemperaturen, von beispielsweise 130 °C, beaufschlagt, so dass insoweit schädliche Wärmespannungen im Filtergehäuse vermieden sind.

Vorzugsweise ist die Umschalteinrichtung benachbart zum Bypass-Filterelement angeordnet und von einer Bedienperson per Hand oder maschinell betätigbar. Weiter ist vorteilhaft, dass die Umschalteinrichtung als Umschaltarmatur ausgebildet mittels eines Handhebels von Hand zwischen den Schaltstellungen betätigbar ist. Der besonders bevorzugt als Einarm-Hebel ausgebildete Handhebel ist an einer für eine Bedienperson leicht zugänglichen Stelle, vorteilhafterweise an einer Oberseite, des Filtergehäuses angeordnet. Neben einer einfachen Bedienbarkeit und einem einfachen konstruktiven Aufwand bietet der Handhebel den Vorteil, dass die jeweilige Schaltstellung der Umschaltarmatur durch die Stellung des Handhebels angezeigt wird und von einer Bedienperson ohne zusätzlichen Aufwand überprüft werden kann. Zur Erhöhung der Betriebssicherheit und zu Fernwartungszwecken kann zumindest ein Sensor zur Überwachung der Schaltstellung der Umschalteinrichtung an der erfindungsgemäßen Filtervorrichtung vorgesehen sein.

Bei einer weiteren bevorzugten Ausführungsform der Erfindung ist mindestens ein Filterelement aus der Mehrzahl von Filterelementen inklusive des Bypass-Filterelementes mittels der Rückspüleinrichtung rückspülbar. Die in einzelnen Filterkammern angeordneten Filterelemente werden typischerweise nacheinander und in kontinuierlicher Folge rückgespült und von am jeweiligen Filtermaterial anhaftenden Schmutzpartikeln im Rückstrom befreit. Durch die kontinuierliche und bedarfsgerechte Rückspülung der einzelnen Filterelemente wird den hohen Anforderungen an Kraft- und Schmierstoffreinheit Rechnung getragen und durch den zugehörigen Schmutzaustrag ansonsten eine hohe Leistungsfähigkeit der Filtervorrichtung gewährleistet.

Zur Rückspülung eines Filterelementes wird die vorzugsweise um die Symmetrieachse des Filtergehäuses drehbare Rückspüleinrichtung zum rückzuspülenden Filterelement gedreht. Die vom Druckmedium beaufschlagte Rückspülmenge wird über einen Rückspülkanal dem abzureinigenden Filterelement zugeführt und über einen weiteren Rückspülkanal und eine an diesen angeschlossene Rückspülleitung aus der Filtervorrichtung abgeführt. Die Rückspülkanäle sind Teil der Rückspüleinrichtung und vorzugsweise über einen gemeinsamen Antrieb im Filtergehäuse drehbar angeordnet. Je nach Anordnung und Durchströmungsrichtung der Filterelemente im Filtrationsbetrieb, von innen nach außen oder von außen nach innen, ist die Position des jeweiligen Rückspülkanals in Bezug zum Filterelement, oberhalb, unterhalb oder seitlich, gewählt. Ein besonders kompakter Aufbau der erfindungsgemäßen Filtervorrichtung ist bei Ausbildung einer zylinderförmigen Rückspüleinrichtung erreicht, die in einem Hauptteil des Filtergehäuses drehbar angeordnet ist und deren Rückspülkanäle in den einzelnen Rückspülstellungen an seitlich vom Hauptteil abzweigenden Fluidzuführungen und Fluidabführungen zu bzw. von den Filterkammern angeordnet sind.

Bei einer weiteren bevorzugten Ausführungsform der erfindungsgemäßen Filtervorrichtung weist die Umschalteinrichtung eine in einem Spindelgehäuse als Teil des Filtergehäuses drehbare Spindel auf, die außenumfangsseitig zwei voneinander separierte Fluidkanäle aufweist, die mit einem Fluideinlass des Filtergehäuses für die Zufuhr von Unfiltrat und mit einem Fluidauslass für die Abfuhr von Filtrat verbunden sind, wobei die beiden Fluidkanäle in der einen Schaltstellung der Umschalteinrichtung mit dem jeweils zur Filtration vorgesehenen Filterelement in Verbindung stehen und in der anderen Schaltstellung mit dem Bypass-Filterelement. Durch die an der Außenseite der Spindel vorzugsweise horizontal und vertikal verlaufenden Fluidkanäle ist neben kurzen Fluidwegen ein guter Wärmeübertrag von dem in den Fluidkanälen geführten Fluidstrom zu den die Spindel umgebenden Wandteilen des Filtergehäuses gewährleistet. Die Angaben "horizontal" und "vertikal" beziehen sich dabei auf die übliche Aufstell- oder Einbaulage der erfindungsgemäßen Filtervorrichtung, deren Filterelemente und Filterkammern in der Regel in vertikaler Einbaurichtung verlaufen.

Durch die in einem Teil des Filtergehäuses drehbar angeordnete Spindel ergibt sich ein kompakter, bauraumsparender Aufbau der Umschalteinrichtung. Typischerweise weist das Spindelgehäuse ein Einbaumaß vergleichbar zu dem einer Filterkammer auf. Vorteilhafterweise sind der Fluideinlass und der Fluidauslass an einem das Spindelgehäuse umgebenden Außenwandteil des Filtergehäuses angeordnet, wobei besonders bevorzugt Fluideinlass und Fluidauslass in vertikaler Richtung bauraumsparend übereinander angeordnet sind.

Bei einer weiteren bevorzugten Ausführungsform der erfindungsgemäßen Filtervorrichtung sind auf einer Innenwand des Filtergehäuses, bezogen auf die Position des Kolbenspeichers, innerhalb des Filtergehäuses zwei voneinander separierte Fluidführungen vorhanden, die den Kolbenspeicher zumindest teilweise umfassen und die in der einen Schaltstellung der Umschalteinrichtung mit dem jeweils zuordenbaren Fluidkanal fluidführend derart verbunden sind, dass eine Filtration mit dem jeweils hierfür vorgesehenen Filterelement ermöglicht ist, das für eine Partikelabreinigung von außen nach innen durchströmt ist. Durch die im Filtergehäuse ausgebildeten Fluidkanäle und Fluidführungen ist eine definierte Fluidführung des abzureinigenden Fluids entsprechend der jeweiligen Schaltstellung der Umschalteinrichtung in funktionssicherer Weise gewährleistet.

Bei einer weiteren bevorzugten Ausführungsform der erfindungsgemäßen Filtervorrichtung nimmt die Rückspüleinrichtung im Gegenstrom zur Filtrationsrichtung eine Abreinigung der Partikelverschmutzung von dem jeweils hierfür vorgesehenen Filterelement vor, indem zwei gegenüberliegend angeordnete Rückspülkanäle unter Absperren der beiden Fluidführungen für den Filtrationsprozess fluidführend mit den beiden gegenüberliegenden Enden des rückzuspülenden Filterelementes verfahrbar im Filtergehäuse geführt sind. Die beiden Rückspülkanäle, von denen der eine vorzugsweise von oben die druckbeaufschlagte Rückspülmenge zuführt und der andere vorzugsweise von unten die verunreinigte Rückspülmenge abführt, sind vorzugsweise über einen gemeinsamen Antrieb drehbar und an Fluidabfuhr und Fluidzufuhr des abzureinigenden Filterelementes anforderungsgerecht positionierbar. Die Dauer und die Häufigkeit eines Rückspülvorgangs am einzelnen Filterelement können anforderungsindividuell gewählt oder gemäß einem vorgegebenen Abreinigungszyklus automatisch eingestellt sein. So kann beim Feststellen einer bestimmten Verschmutzung der Filtermaterialien der Filterelemente, beispielsweise bei Überschreiten eines vorgebbaren Differenzdruckes, die Rückspülung gestartet und die Filterelemente nacheinander mittels der Rückspüleinrichtung abgereinigt werden.

Ein besonders kompakter und stabiler Aufbau der erfindungsgemäßen Filtervorrichtung ist dadurch erreicht, dass die einzelnen Filterelemente an ihrem unteren bodenseitigen Ende geschlossen und an ihrem oberen Ende eine Fluidabfuhr aufweisen, die gegenüber der zuordenbaren Filterkammer abgeschlossen ist, die mit einem radialen Abstand das jeweilige Filterelement umfasst. Bei Anordnung der an einem Ende geschlossenen Filterelemente in der jeweiligen Filterkammer ist der Fluidweg zur Abreinigung des Fluidstroms dadurch festgelegt, dass das Unfiltrat über die im Filtergehäuse ausgebildeten Fluidführungen von einer radialen Seite in die jeweilige Filterkammer einströmt und das darin angeordnete Filterelement von außen nach innen durchströmt. Beim Durchströmen des Filterelementes von außen nach innen bleiben die partikulären Verschmutzungen an der Außenseite des Filtermaterials des jeweiligen Filterelementes zurück und das Filtrat wird über die Fluidabfuhr am oberen Ende des Filterelementes zurück zum Fluidauslass geleitet.

Bei einer weiteren bevorzugten Ausführungsform der Erfindung weist der Kolbenspeicher oberhalb seines Kolbens einen Filtratraum für die Aufnahme von Filtrat aus der Filtervorrichtung und unterhalb desselben einen Steuerraum für die Aufnahme von Druckgas auf, das den Kolben unter Verdrängen des Filtrats im Filtratraum nach oben bewegt, das über den oberen Rückspülkanal und die Fluidabfuhr im Filterelement dessen Abreinigung von Partikelverschmutzungen von innen nach außen vornimmt. Im Filtratraum ist zumindest ein Teil des an den einzelnen Filterelementen abgereinigten Fluids aufnehmbar und wird unter Beaufschlagung des Kolbens mit Druckgas als Druckmedium als Spülflüssigkeit zur Abreinigung eines abzureinigenden Filterelementes eingesetzt. Vorzugsweise wird das gesamte Volumen des im Filtratraum aufgenommenen Filtrats als Rückspülmenge während eines Rückspülvorgangs verwendet und über den entsprechenden Rückspülkanal in den Filterhohlraum des Filterelementes geleitet. Die Abreinigung des entsprechenden Filterelementes erfolgt von innen nach außen, entgegengesetzt zur Filtrationsrichtung. Durch den Druckstoß beim Bewegen des Kolbens im Kolbenspeicher wird eine impulsartige Abreinigung des Filtermaterials erreicht.

Weiter ist vorteilhaft, dass der untere Rückspülkanal der Rückspüleinrichtung mit der Filterkammer des rückzuspülenden Filterelementes verbunden der Abfuhr der Partikelverschmutzung aus der Filtervorrichtung dient. Hierdurch ist eine kompakte, betriebssichere Ausgestaltung der Rückspülung seitlich parallel zum regulären Filtrationsbetrieb gewährleistet.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen an einer erfindungsgemäßen Filtervorrichtung realisiert sein. Die in den Figuren gezeigten Merkmale sind rein schematisch und nicht maßstäblich zu verstehen. Es zeigen:
- Fig. 1: ein Ausführungsbeispiel der erfindungsgemäßen Filtervorrichtung in perspektivischer Schrägansicht;
- Fig. 2: eine Draufsicht von oben auf die Filtervorrichtung aus Fig. 1;
- Fig. 3: die Filtervorrichtung aus Fig. 1 in teilweise geschnittener, perspektivischer Schrägansicht zur Veranschaulichung des Bypass-Betriebes;
- Fig. 4: die Filtervorrichtung aus Fig. 1 in teilweise geschnittener, perspektivischer Schrägansicht zur Veranschaulichung des Filtrationsbetriebes; und
- Fig. 5: die Filtervorrichtung aus Fig. 1 in teilweise geschnittener, perspektivischer Schrägansicht zur Veranschaulichung des Rückspülbetriebes.

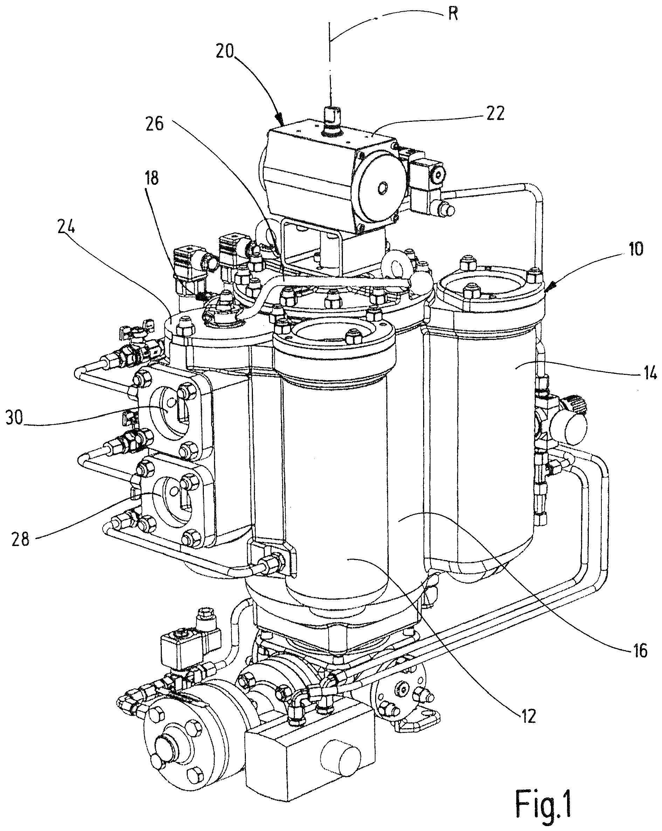

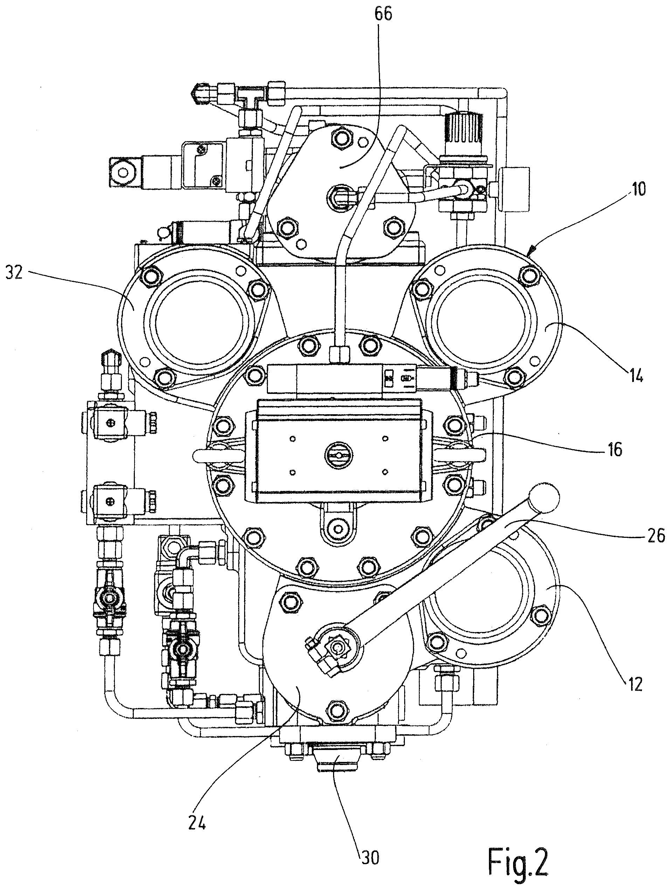

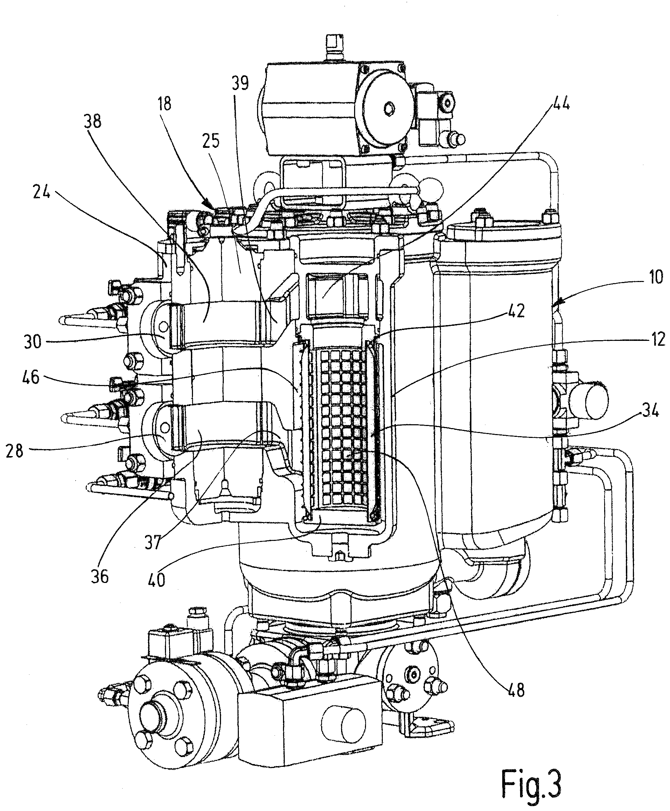

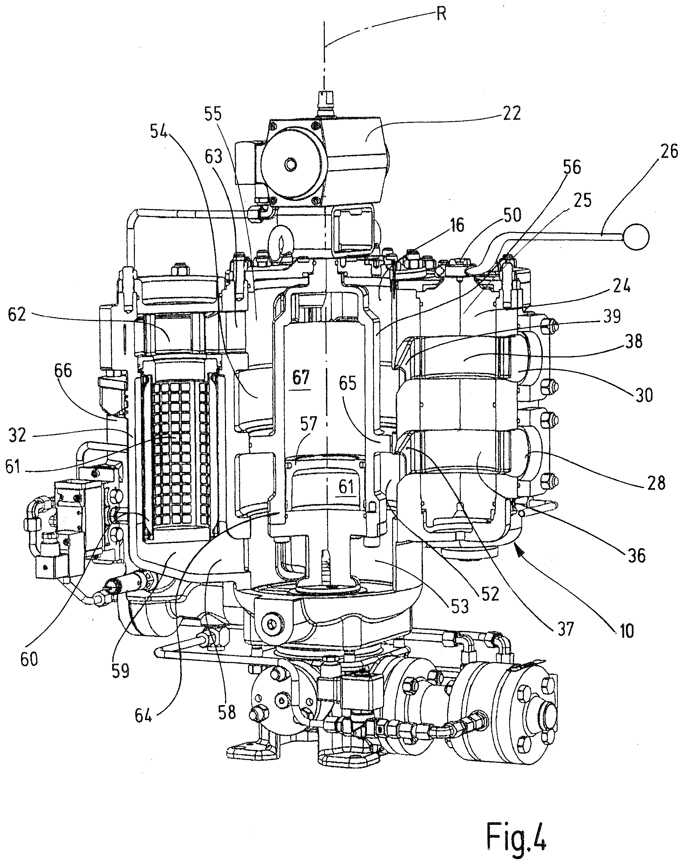

Fig. 1 zeigt eine Gesamtansicht der erfindungsgemäßen Filtervorrichtung mit einem Filtergehäuse 10, welches drei Filterkammern, eine erste Filterkammer 12, eine zweite Filterkammer 14 und eine dritte Filterkammer 32 (vgl. Fig. 2), ein Spindelgehäuse 24, ein Gehäusehauptteil 16 und eine Antriebseinheit 22 aufweist. Ein am Spindelgehäuse 24 für die Zufuhr abzureinigenden Fluids vorgesehener Fluideinlass ist mit 28 bezeichnet, und ein Auslass für die Abfuhr abgereinigten Fluids ist mit 30 bezeichnet. In jede Filterkammer 12, 14, 32 ist ein Filterelement 34 (vgl. Fig. 3), 60 (vgl. Fig. 4) eingesetzt. Zentraler Bestandteil der Filtervorrichtung ist eine Umschalteinrichtung 18, welche vom Spindelgehäuse 24 umhaust ist und von der in Fig. 1 lediglich eine Betätigungseinrichtung in Form eines Handhebels 26 sichtbar ist. Weiter ist eine Rückspüleinrichtung 20 an der Filtervorrichtung vorgesehen, die im Gehäusehauptteil 16 aufgenommen ist und von der in Fig. 1 die oberhalb des Gehäusehauptteils 16 angeordnete Antriebseinheit 22 sichtbar ist.

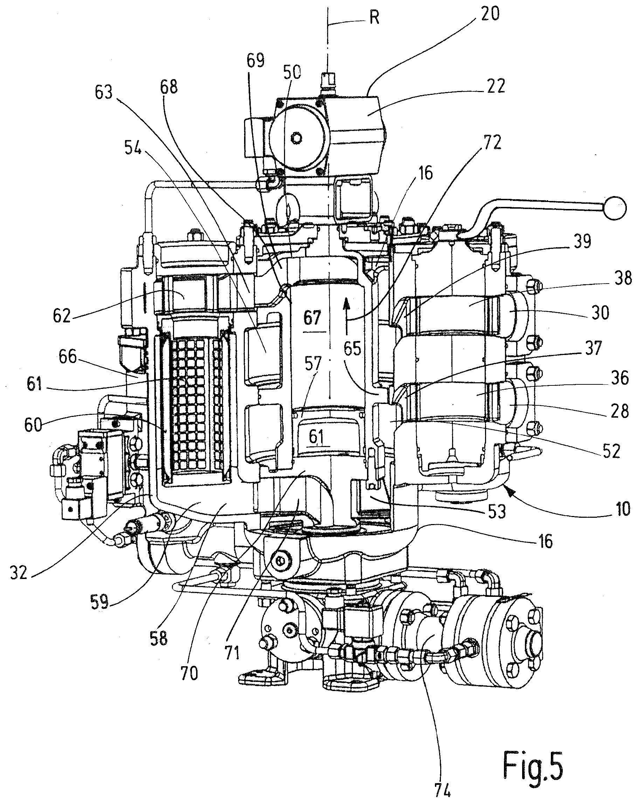

In den jeweils zumindest teilweise geschnittenen Darstellungen der Fig. 3, 4 und 5 sind in Fig. 3 der Bypass-Betrieb, in Fig. 4 der Filtrationsbetrieb und in Fig. 5 der Rückspülbetrieb veranschaulicht. Die Draufsicht von oben auf die Filtervorrichtung der Fig. 2 zeigt, dass die Filterkammern 12, 14, 32 sowie das Spindelgehäuse 24 auf einer Kreislinie liegend derart angeordnet sind, dass sie einen zwischen ihnen liegenden Hydrospeicher im Gehäusehauptteil 16 konzentrisch umgeben. Der Hydrospeicher ist, wie die Fig. 4 und 5 zeigen, durch einen Kolbenspeicher 56 gebildet.

Fig. 3 veranschaulicht den Bypass-Betrieb, in welchem am Fluideinlass 28 in das Filtergehäuse 10 einströmendes Fluid am Bypass-Filterelement 34 in der ersten Filterkammer 12 abgereinigt wird und als Filtrat zum Fluidauslass 30 geleitet wird. Die als Umschaltarmatur ausgebildete Umschalteinrichtung 18 ist mittels des Handhebels 26 von Hand zwischen den Schaltstellungen betätigbar und weist eine im Spindelgehäuse 24 drehbar angeordnete Spindel 25 auf. In der in Fig. 3 gezeigten Schaltstellung der Umschalteinrichtung 18 sind die an der Spindel 25 ausgebildeten Fluidkanäle 36, 38 fluidführend mit der ersten Filterkammer 12 verbunden. In der ersten Filterkammer 12 ist das zylinderförmige Bypass-Filterelement 34 in einer Aufnahme 42 gehalten angeordnet und weist einen geschlossenen Boden 40 auf.

Vom Fluideinlass 28 gelangt das Unfiltrat über den in der Spindel 25 ausgebildeten, horizontal verlaufenden ersten Fluidkanal 36 und ein im Spindelgehäuse 24 ausgebildetes erstes Verbindungsstück 37 zu einem Eingangsraum 46 der ersten Filterkammer 12, wobei der Eingangsraum 46 das Bypass-Filterelement 34 radial umgibt. In dem gezeigten Ausführungsbeispiel ist der Boden 40 des Bypass-Filterelements 34 vom Boden der ersten Filterkammer 12 beabstandet, so dass auch der unterhalb des Bodens 40 liegende Teil des Innenraums der ersten Filterkammer 12 dem Eingangsraum 46 zuzuordnen ist. Vom Eingangsraum 46 aus durchströmt das Unfiltrat das Bypass-Filterelement 34, wird dabei abgereinigt und erreicht einen Filterhohlraum 48. Vom Filterhohlraum 48 aus erreicht das Filtrat eine oberhalb der Aufnahme 42 angeordnete Fluidabfuhr 44 und weiter über ein im Spindelgehäuse 24 ausgebildetes zweites Verbindungsstück 39 und den in der Spindel 25 ausgebildeten zweiten Fluidkanal 38 den Fluidauslass 30.

Das erste und das zweite Verbindungsstück 37, 39 weisen jeweils eine Kanalbreite vergleichbar der Fluidkanäle 36, 38 auf und unterscheiden sich aufgrund des Fluidweges dadurch, dass das erste Verbindungsstück 37 vom ersten Fluidkanal 36 aus mit einem stufenartigen Gefälle zum Eingangsraum 46 hin abfällt und das zweite Verbindungsstück 39 von der Fluidabfuhr 44 aus mit einem stufenartigen Gefälle zum zweiten Fluidkanal 38 hin abfällt. Die in Fig. 3 gezeigte Fluidführung ist dadurch möglich, dass das Spindelgehäuse 24 unmittelbar benachbart zur ersten Filterkammer 12 angeordnet und vorzugsweise einstückig mit dieser ausgebildet ist. Diese Nebeneinanderanordnung ist in der Draufsicht der Fig. 2 gut sichtbar. Fig. 2 zeigt weiter, dass die zweite und die dritte Filterkammer 14, 32 und das Spindelgehäuse 24 bezogen auf die Symmetrieachse R (vgl. Fig. 1) des Gehäusehauptteils 16 gleichermaßen voneinander beabstandet am Gehäusehauptteil 16 angeordnet sind. Die Symmetrieachse R des Gehäusehauptteils 16 ist zugleich die Rotationsachse einer Abtriebswelle der Antriebseinheit 22, beispielsweise in Form eines Elektromotors.

Das Bypass-Filterelement 34 und das in der dritten Filterkammer 32 angeordnete Filterelement 60 (vgl. Fig. 5) sind jeweils hohlzylinderförmig ausgebildet, wobei neben der zylindrischen Form auch eine konisch zulaufende Form möglich ist. Die Filterelemente 34, 36 können als Filterkerzen ausgebildet sein. Als Filtermaterial wird vorzugsweise ein Metallfaservlies, ein Tressengewebe oder ein Quadratmaschengewebe verwendet. Das für die Abreinigung der im Regelbetrieb auftretenden partikulären Verschmutzungen eingesetzte Filterelement 60 weist vorzugsweise ein Filtermaterial mit höherer Filterfeinheit gegenüber dem Bypass-Filterelement 34 auf.

In dem in Fig. 4 gezeigten Filtrationsbetrieb der Filtervorrichtung ist die Schaltstellung der Umschalteinrichtung 18 derart gewählt, dass unter Umgehen des Bypass-Filterelements 34 die anderen Filterelemente 60, soweit sie keiner Rückspülung unterliegen, mit Unfiltrat versorgt werden und das Filtrat abgeführt wird. Hierbei ist der fest mit der Spindel 25 verbundene Handhebel 26 gegenüber der in Fig. 2 gezeigten Bypass-Stellung um etwa 120° bei Draufsicht im Uhrzeigersinn verschwenkt.

In der in Fig. 4 gezeigten Funktionsstellung der Filtervorrichtung erreicht am Fluideinlass 28 in das Filtergehäuse 10 einströmendes Unfiltrat über den ersten Fluidkanal 36 und das erste Verbindungsstück 37 eine bodenseitige Kammer 53 im Gehäusehauptteil 16 und über ein erstes weiteres Verbindungsstück 58 einen weiteren Eingangsraum 59 der dritten Filterkammer 32. In der dritten Filterkammer 32 ist ein Filterelement 60 vergleichbar der Anordnung des Bypass-Filterelementes 34 in der ersten Filterkammer 12 (vgl. Fig. 3) angeordnet. Vom weiteren Eingangsraum 49 aus durchströmt das Fluid das Filterelement 60 in radialer Richtung und erreicht über einen weiteren Filterhohlraum 61 eine weitere Fluidabfuhr 62. Über ein zweites weiteres Verbindungsstück 63 strömt das Filtrat von der weiteren Fluidabfuhr 62 zu einer deckelseitigen Kammer 55 im Gehäusehauptteil 16 und über das zweite Verbindungsstück 39 und den zweiten Fluidkanal 38 zum Fluidauslass 30.

Im Gehäusehauptteil 16 ist koaxial zur Symmetrieachse Rein Kolbenspeicher 56 angeordnet, an dessen Gehäuse 64 über eine Trennwand 65 die bodenseitige Kammer 53 und die deckelseitige Kammer 55 voneinander getrennt sind. An einer Innenwand des Filtergehäuses 10 sind, bezogen auf die Position des Kolbenspeichers 56, zwei voneinander separierte Fluidführungen 52, 54 vorhanden, die den Kolbenspeicher 56 zumindest teilweise umfassen und in der in Fig. 4 gezeigten Schaltstellung der Umschalteinrichtung 18 mit dem jeweils zuordenbaren Fluidkanal 36, 38 verbunden sind.

In der in Fig. 5 gezeigten Funktionsstellung der Filtervorrichtung wird das in der dritten Filterkammer 32 angeordnete Filterelement 60 rückgespült. Die Rückspüleinrichtung 20 umfasst zwei am Kolbenspeicher 56 ausgebildete Spülarme 68, 70, welche über eine zugehörige Drehbewegung des Kolbenspeichers 56 zur zugehörigen Filterkammer 12, 14, 32 geführt werden. Durch die Spülarme 68, 70 sind die beiden Fluidführungen 52, 54 für einen Filtrationsprozess in der dritten Filterkammer 32 abgesperrt. Auf diese Weise ist es möglich, mit einem Filterelement Fluid zu filtrieren und das jeweils andere Filterelement dabei gleichzeitig rückzuspülen. Durch einen längsverfahrbar im Speichergehäuse 64 geführten Kolben 57 ist der Innenraum des Kolbenspeichers 56 in einen Filtratraum 67 für die Aufnahme von Filtrat aus der Filtervorrichtung und einen Steuerraum 56 für die Aufnahme von Druckgas unterteilt. Über eine Auffüllbohrung 50, welche in der Wand des oberen Spülarms 68 ausgebildet und zur Bildung einer engen Eintrittsöffnung vorzugsweise im Durchmesser gestuft ist, strömt Filtrat aus der deckelseitigen Kammer 55 in den Filtratraum 67 des Kolbenspeichers 56 und befüllt diesen Filtratraum 67, während sich der Kolben 57 des Kolbenspeichers 56 nach unten in die in Fig. 5 gezeigte Position bewegt.

Das Gas ist in einem Gastank 66 bevorratet, welcher benachbart zur zweiten und dritten Filterkammer 14, 32 am Filtergehäuse 10 angeordnet ist, vgl. Fig. 2. Für die Durchführung einer Rückspülung wird durch Zufuhr von Druckgas in den Steuerraum 61 der Kolben 57 nach oben getrieben, wie mit Pfeil 72 veranschaulicht, um aus dem im Filtratraum 67 befindlichen Filtrat eine Strömung in der Art eines Druckstoßes zu erzeugen. Über einen vom oberen Spülarm 68 vorgegebenen oberen Rückspülkanal 69, das zweite weitere Verbindungsstück 63 und die weitere Fluidabfuhr 62 erreicht der Druckstoß den weiteren Filterhohlraum 61. Beim Durchströmen des Filterelements 60 von innen nach außen werden am Filtermaterial anhaftende partikuläre Verschmutzungen abgereinigt und über den weiteren Eingangsraum 59 und einen vom unteren Spülarm 70 vorgegebenen unteren Rückspülkanal 71 die Rückspülmenge samt Abreinigungen in eine ventilangesteuerte Rückspülleitung 74 und über diese aus der Filtervorrichtung abgeleitet.

## Patentansprüche

1. Filtervorrichtung zum Abreinigen von partikulären Verschmutzungen aus einem Fluidstrom mit einer Mehrzahl von Filterelementen (34, 60), die in Filterkammern (12, 14, 32) als Bestandteil eines gemeinsamen Filtergehäuses (10) aufgenommen sich um eine Rückspüleinrichtung (20) gruppieren, die zur Aufnahme einer Rückspülmenge einen Kolbenspeicher (56) aufweist, in dessen Speichergehäuse (64) längsverfahrbar ein Kolben (57) geführt ist, der von einem Druckmedium angesteuert die im Speichergehäuse (64) bevorratete Rückspülmenge an mindestens ein für seine Abreinigung rückzuspülendes Filterelement (60) über eine Rückspüleinrichtung (20) weiterleitet, die auch die Abfuhr der Rückspülmenge aus der Filtervorrichtung vornimmt, **dadurch gekennzeichnet, dass** ein bestimmtes Filterelement als Bypass-Filterelement (34), das Teil der Mehrzahl von Filterelementen (34, 60) ist, nach Betätigen einer Umschalteinrichtung (18) ausschließlich die Partikelabreinigung des Fluidstroms vornimmt und die anderen Filterelemente (60) von dieser Abreinigung ausgenommen sind, und dass die Umschalteinrichtung (18) gleichfalls in dem gemeinsamen Filtergehäuse (10) aufgenommen ist.

2. Filtervorrichtung nach Anspruch 1, **dadurch gekennzeichnet, dass** die Umschalteinrichtung (18) eine Verteileinrichtung aufweist, die in ihrer einen Schaltstellung unter Umgehen des Bypass-Filterelementes (34) die anderen Filterelemente (60), soweit sie keiner Rückspülung unterliegen, mit Unfiltrat versorgt und das Filtrat abführt und die in einer weiteren Schaltstellung unter Umgehen dieser Filterelemente (60) das Bypass-Filterelement (34) mit Unfiltrat versorgt und das Filtrat abführt.

3. Filtervorrichtung nach Anspruch 1 oder 2, **dadurch gekennzeichnet, dass** die Umschalteinrichtung (18) als Umschaltarmatur ausgebildet mittels eines Handhebels (26) von Hand zwischen den Schaltstellungen betätigbar ist.

4. Filtervorrichtung nach einem der vorstehenden Ansprüche, **dadurch gekennzeichnet, dass** mindestens ein Filterelement (60) aus der Mehrzahl von Filterelementen (34, 60) einschließlich des Bypass-Filterelementes (34, 60) mittels der Rückspüleinrichtung (20) rückspülbar ist.

5. Filtervorrichtung nach einem der vorstehenden Ansprüche, **dadurch gekennzeichnet, dass** die Umschalteinrichtung (18) eine in einem Spindelgehäuse (24) als Teil des Filtergehäuses (10) drehbare Spindel (25) aufweist, die außenumfangsseitig zwei voneinander separierte Fluidkanäle (36, 38) aufweist, die mit einem Fluideinlass (28) des Filtergehäuses (10) für die Zufuhr von Unfiltrat und einem Fluidauslass (30) für die Abfuhr von Filtrat verbunden sind, und dass die beiden Fluidkanäle (36, 38) in der einen Schaltstellung der Umschalteinrichtung (18) mit dem jeweils zur Filtration vorgesehenen Filterelement (60) in Verbindung stehen und in der anderen Schaltstellung mit dem Bypass-Filterelement (34).

6. Filtervorrichtung nach Anspruch 5, **dadurch gekennzeichnet, dass** auf einer Innenwand des Filtergehäuses (10), bezogen auf die Position des Kolbenspeichers (56), innerhalb des Filtergehäuses (10) zwei voneinander separierte Fluidführungen (52, 54) vorhanden sind, die den Kolbenspeicher (56) zumindest teilweise umfassen und die in der einen Schaltstellung der Umschalteinrichtung (18) mit dem jeweils zuordenbaren Fluidkanal (36, 38) fluidführend derart verbunden sind, dass eine Filtration mit dem jeweils hierfür vorgesehenen Filterelement (60) ermöglicht ist, das für eine Partikelabreinigung von außen nach innen durchströmt ist.

7. Filtervorrichtung nach Anspruch 6, **dadurch gekennzeichnet, dass** die Rückspüleinrichtung (20) im Gegenstrom zur Filtrationsrichtung eine Abreinigung der Partikelverschmutzung von dem jeweils hierfür vorgesehenen Filterelement (60) vornimmt, indem zwei gegenüberliegend angeordnete Rückspülkanäle (69, 71) unter Absperren der beiden Fluidführungen (52, 54) für den Filtrationsprozess fluidführend mit den beiden gegenüberliegenden Enden des rückzuspülenden Filterelementes (60) verfahrbar im Filtergehäuse (18) geführt sind.

8. Filtervorrichtung nach einem der vorstehenden Ansprüche, **dadurch gekennzeichnet, dass** die einzelnen Filterelemente (34, 60) an ihrem unteren bodenseitigen Ende geschlossen und an ihrem oberen Ende eine Fluidabfuhr (44, 62) aufweisen, die gegenüber der zuordenbaren Filterkammer (12, 14, 32) abgeschlossen ist, die mit einem radialen Abstand das jeweilige Filterelement (34, 60) umfasst.

9. Filtervorrichtung nach Anspruch 7 oder 8, **dadurch gekennzeichnet, dass** der Kolbenspeicher (56) oberhalb seines Kolbens (57) einen Filtratraum (67) für die Aufnahme von Filtrat aus der Filtervorrichtung und unterhalb desselben einen Steuerraum (61) für die Aufnahme von Druckgas aufweist, das den Kolben (57) unter Verdrängung des Filtrats im Filtratraum (59) nach oben bewegt, das über den oberen Rückspülkanal (69) und die Fluidabfuhr (62) im Filterelement (60) dessen Abreinigung von Partikelverschmutzungen von innen nach außen vornimmt.

10. Filtervorrichtung nach einem der vorstehenden Ansprüche, **dadurch gekennzeichnet, dass** der untere Rückspülkanal (71) der Rückspüleinrichtung (20) mit der Filterkammer (32) des rückzuspülenden Filterelementes (60) verbunden der Abfuhr der Partikelverschmutzung aus der Filtervorrichtung dient.

## Claims

1. Filter device for cleaning particulate contaminants from a fluid flow, having a plurality of filter elements (34, 60) which, accommodated in filter chambers (12, 14, 32) as part of a common filter housing (10), are grouped around a backflushing device (20) which, to receive a backflush quantity, has a piston accumulator (56) in the accumulator housing (64) of which a piston (57) is guided so as to be longitudinally movable, which piston, activated by a pressure medium, routes the backflush quantity stored in the accumulator housing (64) to at least one filter element (60), which is to be backflushed in order to clean it, via a backflushing device (20) which also carries out removal of the backflush quantity from the filter device, **characterised in that** a specific filter element, as a bypass filter element (34), which is part of the plurality of filter elements (34, 60), exclusively carries out particle cleaning of the fluid flow after activation of a switchover device (18) and the other filter elements (60) are excluded from this cleaning, and **in that** the switchover device (18) is likewise accommodated in the common filter housing (10).

2. Filter device according to claim 1, **characterised in that** the switchover device (18) has a distributing device which, in its one switching position while bypassing the bypass filter element (34), supplies the other filter elements (60), insofar as they are not subject to any backflushing, with unfiltered medium and discharges the filtrate and which, in a further switching position while bypassing these filter elements (60), supplies the bypass filter element (34) with unfiltered medium and discharges the filtrate.

3. Filter device according to claim 1 or 2, **characterised in that** the switchover device (18), configured as a switchover valve, can be manually operated between the switching positions by means of a manual lever (26).

4. Filter device according to one of the preceding claims, **characterised in that** at least one filter element (60) of the plurality of filter elements (34, 60), including the bypass filter element (34, 60), can be backflushed by means of the backflushing device (20).

5. Filter device according to one of the preceding claims, **characterised in that** the switchover device (18) comprises a spindle (25) which is rotatable in a spindle housing (24) as part of the filter housing (10) and which comprises, on the outer circumference, two fluid channels (36, 38) which are separated from each other and which are connected to a fluid inlet (28) of the filter housing (10) for the supply of unfiltered medium and to a fluid outlet (30) for the discharge of filtrate, and **in that** the two fluid ducts (36, 38) are connected, in the one switching position of the switchover device (18), to the filter element (60) provided in each case for filtration and, in the other switching position, to the bypass filter element (34).

6. Filter device according to claim 5, **characterised in that**, on an inner wall of the filter housing (10), with respect to the position of the piston accumulator (56), there are two fluid ducts (52, 54) separated from each other within the filter housing (10) which at least partially surround the piston accumulator (56) and which, in the one switching position of the switchover device (18), are connected to the respectively associated fluid channel (36, 38) in a fluid-conducting manner in such a way that filtration is made possible using the filter element (60) provided in each case for this purpose, the flow through the filter element going from outside to inside for particle cleaning.

7. Filter device according to claim 6, **characterised in that** the backflushing device (20) carries out cleaning of the particle contaminants from the filter element (60) provided in each case for this purpose in counterflow to the filtration direction, **in that** two backflushing channels (69, 71) arranged opposite each other are routed movably in the filter housing (18) in a fluid-conducting manner with the two opposing ends of the filter element (60) to be backflushed, while the two fluid ducts (52, 54) for the filtration process are shut off.

8. Filter device according to one of the preceding claims, **characterised in that** the individual filter elements (34, 60) are closed at their lower bottom end and have a fluid discharge (44, 62) at their upper end, which is closed off with respect to the associated filter chamber (12, 14, 32) and which surrounds the respective filter element (34, 60) with a radial gap.

9. Filter device according to claim 7 or 8, **characterised in that** the piston accumulator (56) has a filtrate chamber (67) above its piston (57) for receiving filtrate from the filter device and below the same a control chamber (61) for receiving compressed gas which moves the piston (57) upwards while displacing the filtrate in the filtrate chamber (59) and which, via the upper backflush channel (69) and the fluid discharge (62) in the filter element (60), cleans the filter element of particle contaminants from inside to outside.

10. Filter device according to one of the preceding claims, **characterised in that** the lower backflush channel (71) of the backflushing device (20), connected to the filter chamber (32) of the filter element (60) to be backflushed, serves to remove the particle contaminants from the filter device.

## Revendications

1. Installation de filtration pour épurer un courant de fluide de salissures particulaires comprenant une pluralité d'éléments (34, 60) de filtre qui, reçue dans des chambres (12, 14, 32) de filtre comme partie constitutive d'une enveloppe (10) commune de filtre, sont regroupés autour d'un dispositif (20) de lavage en retour, lequel a pour la réception d'une quantité de lavage en retour un accumulateur (56) à piston dans l'enveloppe (64) d'accumulateur duquel un piston (57) est guidé avec possibilité de se déplacer longitudinalement, piston qui, commandé par un fluide sous pression, achemine la quantité de lavage en retour mise en réserve dans l'enveloppe (64) de l'accumulateur par au moins un dispositif (20) de lavage en retour vers au moins un élément (60) de filtre lavé en retour pour son nettoyage, dispositif (20) de lavage en retour qui effectue aussi l'évacuation de la quantité de lavage en retour de l'installation de filtration, **caractérisée** qu'un élément de filtre déterminé comme élément (34) de filtre de dérivation, qui fait partie de la pluralité d'éléments (34, 60) de filtre, effectue après l'actionnement d'un dispositif (18) de commutation exclusivement l'épuration des particules du courant de fluide et les autres éléments (60) de filtre sont exclus de cette épuration et en ce que le dispositif (18) de commutation est reçu de la même façon dans l'enveloppe (10) commune de filtre.

2. Installation de filtration suivant la revendication 1, **caractérisée en ce que** le dispositif (18) de commutation a un dispositif de répartition, qui, dans une position de commutation, en contournant l'élément (34) de filtre de dérivation, alimente les autres éléments (60) de filtre, pour autant qu'ils ne sont pas soumis à un lavage en retour, en non filtrat et évacue le filtrat et qui, dans une autre position de commutation, en contournant ces éléments (60) de filtre, alimente l'élément (34) de filtre de dérivation en non filtrat et évacue le filtrat.

3. Installation de filtration suivant la revendication 1 ou 2, **caractérisée en ce que** le dispositif (18) de commutation est constitué sous la forme d'une robinetterie de commutation, qui peut être actionnée au moyen d'un levier (26) manuel à la main pour passer entre les positions de commutation.

4. Installation de filtration suivant l'une des revendications précédentes, **caractérisée en ce qu'**au moins un élément (60) de filtre parmi la pluralité des éléments (34, 60) de filtre y compris l'élément (34, 60) de filtre de dérivation peut être lavé en retour au moyen du dispositif (20) de lavage en retour.

5. Installation de filtration suivant l'une des revendications précédentes, **caractérisée en ce que** le dispositif (18) de commutation a une broche (25) tournante dans une enveloppe (24) de broche comme partie de l'enveloppe (10) de filtre, broche qui a du côté du pourtour extérieur deux conduits (36, 38) pour du fluide séparés l'un de l'autre, qui communiquent avec une entrée (28) de fluide de l'enveloppe (10) du filtre pour l'apport de non filtrat et avec une sortie (30) de fluide pour l'évacuation de filtrat et **en ce que** les deux conduits (36, 38) pour du fluide sont, dans une position de commutation du dispositif (18) de commutation, en communication avec l'élément (60) de filtre prévu respectivement pour la filtration et, dans l'autre position de commutation, avec l'élément (34) de filtre de dérivation.

6. Installation de filtration suivant la revendication 5, **caractérisée en ce que**, sur une paroi intérieure de l'enveloppe (10) de filtre, rapporté à la position de l'accumulateur (56) à piston, à l'intérieur de l'enveloppe (10) de filtre sont prévues deux conduites (52, 54) de fluide séparées l'une de l'autre, qui entourent au moins en partie l'accumulateur (56) à piston et qui, dans la première position de commutation du dispositif (18) de commutation, communique fluidiquement avec le conduit (36, 38) pour du fluide pouvant être associé respectivement de manière à rendre possible une filtration par l'élément (60) de filtre prévu respectivement à cet effet, lequel est parcouru de l'extérieur vers l'intérieur pour une épuration des particules.

7. Installation de filtration suivant la revendication 6, **caractérisée en ce que** le dispositif (20) de lavage en retour effectue à contrecourant du sens de filtration une épuration de l'élément de filtre, prévu respectivement à cet effet, de la salissure particulaire par le fait que deux conduits (69, 71) de lavage en retour disposés en opposition passent, en pouvant se déplacer dans l'enveloppe (18) du filtre, en bloquant les deux conduites (52, 54) pour du fluide, pour l'opération de filtration en communication fluidique avec les deux extrémités opposées de l'élément (60) de filtre à laver en retour.

8. Installation de filtration suivant l'une des revendications précédentes, **caractérisée en ce que** les divers éléments (34, 60) de filtre sont fermés à leur extrémité inférieure du côté du fond et ont à leur extrémité supérieure une évacuation (44, 62) de fluide, qui est fermée par rapport à la chambre (12, 14, 32) de fluide pouvant être associée, qui entoure l'élément (34, 60) de filtre respectif à une distance radiale.

9. Installation de filtration suivant la revendication 7 ou 8, **caractérisée en ce que** l'accumulateur (56) à piston a au-dessus de son piston (57) un espace (67) à filtrat pour la réception de filtrat provenant de l'installation de filtration et en-dessous du même un espace (61) de commande pour la réception de gaz comprimé, qui déplace le piston (57) vers le haut en repoussant le filtrat dans l'espace (59) pour du filtrat qui, par le conduit (69) supérieur de lavage en retour et l'évacuation (32) de fluide dans l'élément (60) de filtre, effectue de l'intérieur vers l'extérieur son épuration de salissures particulaires.

10. Installation de filtration suivant l'une des revendications précédentes, **caractérisée** en ce le conduit (71) inférieur de lavage en retour du dispositif (20) de lavage en retour, communiquant avec la chambre (32) de filtre de l'élément (60) de filtre à laver en retour, sert à l'évacuation de la salissure particulaire de l'installation de filtration.
